Europäisches Patentamt

European Patent Office

Office européen des brevets

(19)

(11) EP 0 351 242 B1

## (12) EUROPEAN PATENT SPECIFICATION

(45) Date of publication and mention
of the grant of the patent:
**15.12.1999  Bulletin 1999/50**

(51) Int Cl.6: **G06F 7/52**, G06F 7/552

(21) Application number: **89307180.3**

(22) Date of filing: **14.07.1989**

(54) **Floating point arithmetic units**

Gleitkomma-arithmetische Einheiten

Unités arithmétiques à virgule flottante

(84) Designated Contracting States:
**DE FR GB**

(30) Priority: **15.07.1988 JP 17487288**
**15.08.1988 JP 20189188**

(43) Date of publication of application:
**17.01.1990  Bulletin 1990/03**

(73) Proprietor: **FUJITSU LIMITED**
**Kawasaki-shi, Kanagawa 211 (JP)**

(72) Inventor: **Katsuno, Akira**
**Ebina-shi Kanagawa 243-04 (JP)**

(74) Representative:
**Fane, Christopher Robin King et al**
**Haseltine Lake & Co.,**
**Imperial House,**
**15-19 Kingsway**
**London WC2B 6UD (GB)**

(56) References cited:
**US-A- 4 594 680**

- **MICROPROCESSORS AND MICROSYSTEMS.
vol. 5, no. 6, August 1981, LONDON GB pages
235 - 239; BURKHARDT ET AL.: 'High-speed
divider using multiplication '**
- **EDN ELECTRICAL DESIGN NEWS. vol. 31, no. 3,
February 1986, NEWTON, MASSACHUSETTS US
pages 143 - 150; QUONG: 'Floating-point mP
implements high-speed math functions '**

## Description

The present invention relates to floating point arithmetic units for use, for example, in carrying out division or square root operations on numerical values expressed in floating point notation.

Arithmetic operations using operands supplied in floating point form can provide wide dynamic range and high accuracy, and accordingly such floating point operations are advantageously used in various high-level computing operations, in which, for example, high speed processing of division and square root operations is required.

Division operations may be carried out by using a number of methods, for example, substraction and shift, and converging methods such as the Newton-Raphson method. In the substraction and shift method, the shifted divisor is repeatedly subtracted from a dividend; one form of this method, known as the non-restoring method, can calculate the required quotient at high speed. In a converging method, the reciprocal of the divisor is calculated by an iterative process and this reciprocal is then multiplied by the dividend to obtain the quotient. In this method, the number of operation cycles needed to produce the required result is reduced as compared with other methods, provided that an initial assumed value of the reciprocal is sufficiently close to the true value finally obtained by the iterative process.

A converging method (e.g. Newton-Raphson method) may also be used in square root operations. In this method the square root of a number B is produced by first calculating $1/\sqrt{B}$ and then multiplying the obtained value by B to give $\sqrt{B}$. When a calculation of $1/\sqrt{B}$ is executed by the Newton-Raphson method, the number of operational cycles needed may be kept desirably small provided that the initial assumed reciprocal value for the square root ($1/\sqrt{B}$) is close to the final desired value.

Many of the known floating point arithmetic units utilize the Newton-Raphson method because, in other methods, the quotient obtained by one cycle is only accurate to at most 3 to 4 bits, so that to obtain the final quotient, the calculations must be repeated for eight cycles in order to achieve a result in conformity with the IEEE single-precision standard. In contrast, in the Newton-Raphson method, if the assumed initial value of the reciprocal is sufficiently close to the true value required, the quotient may be obtained by an iterative converging calculation requiring only about 3 to 4 cycles, and accordingly, in such a dividing operation using the Newton-Raphson method, the quotient can be obtained at a higher speed than with the other methods. Many units also utilize the Newton-Raphson method for the square root operation, since here too, provided that the initial assumed reciprocal root value is sufficiently accurate, a converging calculation of about 3 to 4 cycles is sufficient, and accordingly, such a square root operation by the Newton-Raphson method can be processed at a high speed.

A division operation using the Newton-Raphson method is explained below.

In a first step of the division operation, a reciprocal function is calculated. For example, the division expression C = A/B may be expressed, using a reciprocal form, as C = A(1/B). The reciprocal function (1/B) is calculated by the Newton-Raphson method using iteration of the formula:

$$X_{i+1} = X_i (2 - BX_i)$$

where, i = 0, 1, 2, ...; $X_0$ is the initial assumed value of the reciprocal of the divisor B; and $X_i$ is the ith approximation of (1/B). If the initial value $X_0$ satisfies the inequality $(2/B) > |X_0| > 0$, convergence of the iterative calculation is assured. In a typical method of obtaining the initial value, the upper 10 bits (small variations in this number being possible) of the divisor are used as a pointer to a memory (ROM) holding a look-up table of initial values. The ROM outputs the appropriate initial value $X_0$ in response to an address indicated by the pointer bits of the divisor. The output initial value ($X_0$) typically has substantially the same number of bits as the applied pointer (in this example, 10 bits). In the case of a floating point division operation, the reciprocals of both an exponent portion and a mantissa portion are obtained in this way from respective look-up tables (ROM).

The looked-up initial value $X_0$ is used in an iterative process to determine 1/B, whereafter two binary operands $D_1(=A)$ and $D_2 (=1/B)$ are expressed in floating point form, as follows,

$$D_1 = (-1)^{Sa} \, 2^{Ea-BS} \qquad (1.Fa)$$

$$D_2 = (-1)^{Sb} \, 2^{Eb-BS} \qquad (1.Fb)$$

where

| | |
|---|---|
| Sa | is the sign of the operand $D_1$ |
| Sb | is the sign of the operand $D_2$ |
| Ea | is the exponent of the operand $D_1$ |
| Eb | is the exponent of the operand $D_1$ |
| BS | is a predetermined negative exponent bias |
| (1.Fa) | denotes the mantissa of the operand $D_1$ which is of fixed point format having one significant digit before the binary point, and |
| (1.Fb) | denotes the mantissa of the operand $D_2$ which is of fixed point format having one significant digit before the binary point, |

and the following operations are executed. The respective mantissas (1.Fa) and (1.Fb) of the input data $D_1$ and $D_2$ are multiplied together, by means of a fixed point multiplication circuit, to obtain the result (1.Fa) x (1.Fb). This result is necessarily either of the form 1.xxxx... or 1x. xxxx.... Although 1.xxxx... is already normalized, 1x. xxxx... still remains to be normalized. This normalization is executed in response to an overflow signal by shifting the data to the right by one bit and by increasing the exponent portion by one. Then, the normalized value may be rounded off to place the output data in the required format. If the bits are all "1", an overflow occurs, and in this case the data is shifted by one bit to the right. The above processes provide a final output which is a normalized number constituting the mantissa of A/B.

To determine the required exponent, the operation (Ea + Eb) is executed and the result is added to a negative bias (-BS); i.e. (Ea + Eb - BS) is obtained. Then, if the above-mentioned overflow is generated during normalization, the exponent value is incremented by one as mentioned above. A similar exponent increment operation is performed in the case of an overflow arising from the rounding off process.

A sign operation is performed by an exclusive OR circuit, to give the sign of the quotient A/B.

When the above-described division process is carried out, using a floating point binary arithmetic unit, calculation of the reciprocal (1/B) of the divisor by the iterative process based on the formula $X_{i+1} = X_i(2 - BX_i)$ requires the multiplication $BX_i$, the subtraction $(2 - BX_i)$, and the multiplication $X_i(2 - BX_i)$.

In particular, an addition or subtraction circuit has conventionally been included, to execute the subtraction $(2 - BX_i)$, and each step in the above iterative process conventionally requires three separate arithmetic operations.

For example, US 4594680 describes a floating point arithmetic unit, for executing an iterative binary arithmetic operation upon two operands applied to the unit in floating point form, which unit includes respective operating portions for deriving mantissa, exponent and sign components of the desired result respectively, the mantissa operating portion including fixed point multiplication means for multiplying together the respective mantissa components of the two operands concerned.

In this floating point arithmetic unit the subtraction means include an adder which is used to perform a two's-complement decrement operation, and a complementer which performs a one's-complement operation on the output of the adder.

Another floating point arithmetic unit (divider), described in "High-speed divider using multiplication", K J Burkhardt and S Leung, Microprocessors and Microsystems, vol 5, no. 6, August 1981, simply employs a one's complementer as the subtraction means, but in this case the exact formula $2-BX_i$ cannot be used and is replaced by the approximation $2-2^{-16}-BX_i$. This approximation provides high-speed operation, but a large error occurs.

In a square root operation using a Newton-Raphson method, a reciprocal function is calculated, so that, for example, $C = \sqrt{B}$ is expressed as $C = B(1/\sqrt{B})$. The appropriate iterative process in such a Newton-Raphson method can be based on the formula:

$$X_{i+1} = (1/2)^*X_i(3 - BX_i^2)$$

where $X_0$ (corresponding to i = 0) is an assumed first approximation to the reciprocal of $\sqrt{B}$; $X_i$ is an ith approximation value; and the asterisk denotes multiplication.

If the initial value $X_0$ satisfies the inequality $0 < X_0 < \sqrt{3/B}$, the iterative calculation will converge, and the operation can be completed. In a typical method of obtaining the initial value, as described above, the upper 10 bits (small variation in this number being possible) of B are applied to a look up table (ROM) as a pointer, and the ROM supplies the appropriate initial value $X_0$ from the memory location in accordance with the value of B. Typically, the number of bits in the initial value $X_0$ is substantially the same as that of the pointer. Generally, in floating point operations, the reciprocals of the exponent and the mantissa are derived in this way from respective look up tables.

In the square root operation, to find $1/\sqrt{B}$ an iterative process based on the formula $X_{i+1} = (1/2)^*X_i(3 - BX_i^2)$ must be performed, so that each iterative cycle comprises the following five arithmetic operations:

$$MLT: B^*X_i \text{ (hereinafter } B^*X_i = Y_i)$$

$$MLT: Y_i^*X_i$$

$$SUB: 3 - (Y_i^*X_i)$$

$$MLT: X_i^*(3 - (Y_i^*X_i))$$

$$MLT: (1/2)^*(X_i^*(3 - (Y_i^*X_i)))$$

where MLT denotes multiplication, and SUB denotes subtraction.

According to the present invention there is provided a floating point arithmetic unit, for executing an iterative binary arithmetic operation upon two operands applied to the unit in floating point form, which unit includes respective operating portions for deriving mantissa, exponent and sign components of the desired result respectively, the mantissa operating portion including fixed point multiplication means for multiplying together the respective mantissa components of the two operands concerned; characterised in that the mantissa operating portion further includes subtraction means operative, in each cycle of the iterative operation, to form the inverse of the fractional part of a binary number derived from the output of the said multiplication means, which derived binary number is greater than 0 and less than or equal to 1, and to increment that inverse by adding one to the least significant bit thereof, thereby to produce a binary output value representative of the difference between a first predetermined positive integer and the said derived binary number without adding that integer to the derived binary number, the said first predetermined positive integer being 2 or 3.

Such a floating point arithmetic unit can perform one or each of the above-mentioned iterative processes required in division and square root operations, for example, in a manner that is more efficient than hitherto conventional means for performing such processes.

Reference will now be made, by way of example, to the accompanying drawings, in which:

> Figure 1 is a block diagram of one example of a floating point arithmetic unit;
> Fig. 2 is a schematic block diagram of a part of a floating point arithmetic unit embodying the present invention;
> Fig. 3 is a more detailed block diagram of a floating point arithmetic unit embodying the present invention; and
> Fig. 4 is a block diagram of a modified form of the floating point arithmetic unit of Fig. 3.

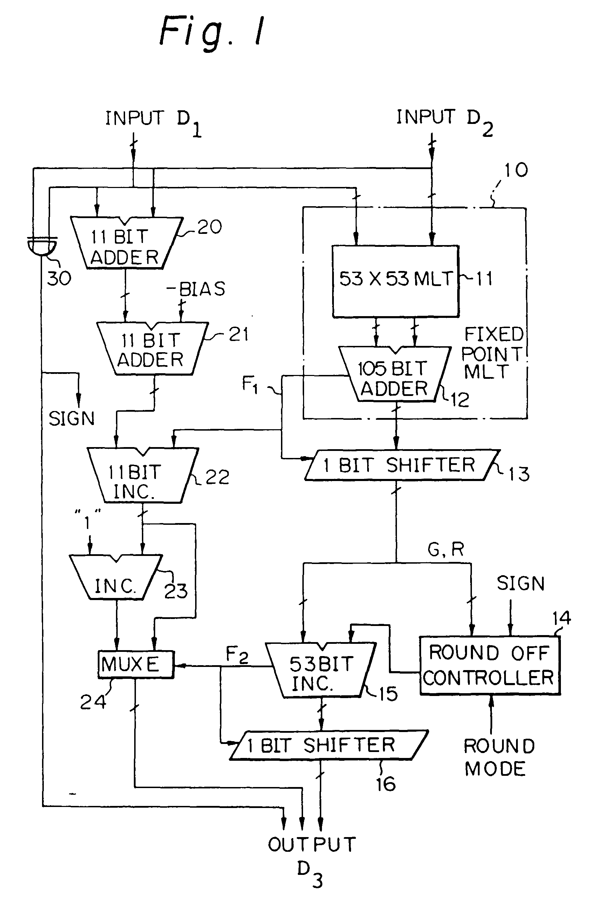

The floating point operation unit of Fig. 1 receives binary input operands $D_1$ and $D_2$, in floating point form, and comprises an exponent operation circuit, a sign operation circuit, and a mantissa operation circuit. The exponent operation circuit comprises adders 20 and 21, incrementers 22 and 23, and a multiplexer 24; the sign operation circuit comprises an exclusive OR circuit 30; and the mantissa operation circuit comprises a fixed point operation circuit (or multiplication circuit) 10, right shifters 13 and 16, a rounding off controller 14, and an incrementer 15.

Assuming that exponents of the inputs are Ea and Eb, the operation (Ea + Eb) is executed in the first adder 20 and the result is added in the second adder 21 to a negative bias (-BS) to give (Ea + Eb - BS). Then, in the incrementer 22 an increment by one operation (+1) is executed (in dependence upon a signal $F_1$) when a correction of an overflow is necessary for normalization, and in the incrementer 23 an increment by one operation (+1) is executed so that any overflow arising from a rounding off process (described below) and indicated by an overflow signal $F_2$ can be corrected by selecting in the multiplexer 24 the incremented output of the incrementer 23.

In the sign operation circuit, an exclusive OR operation is carried out, using the exclusive OR circuit 30, for the signs Sa and Sb of the input operands $D_1$ and $D_2$.

In the mantissa operation circuit, the respective mantissa portions of the operands $D_1$ and $D_2$, namely (1.Fa) and (1.Fb), are multiplied together by the fixed point multiplication circuit 10, and if a carry signal $F_1$ is output from the circuit 10, normalization of the resulting product is carried out by a one bit right shift effected in the right shifter 13. The carry signal $F_1$ is supplied simultaneously to the incrementer 22 so that "1" is added to the exponent as mentioned above. The rounding off of the normalized result is controlled by the rounding off controller 14, and the rounding off process is performed in the incrementer 15 by adding "+1" to the LSB (least significant bit) when necessary. When an overflow arises in the incrementer 15, the carry signal $F_2$ is output and the right shifter 16 shifts the output of the incrementer 15 by one bit to the right, and thus the normalized mantissa is obtained.

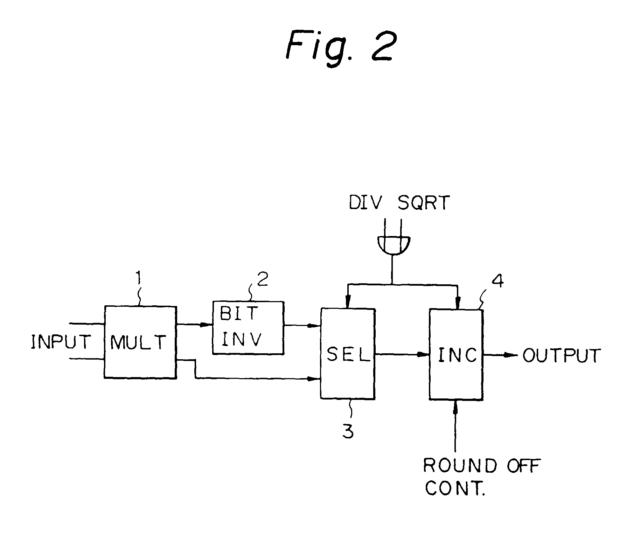

The floating point operation unit of Fig. 2 comprises a multiplying circuit 1 for multiplying mantissa portions by each other (which mantissa portions form respective parts of the two binary input operands applied to the unit), and for normalizing the output; a bit inversion circuit 2 for inverting the output data from the multiplying circuit; a selection circuit 3 for selecting either the output of the bit inversion circuit or the output of the multiplying circuit in response to a 'division' or 'square root' control signal which becomes active during one of the operations in the division or square root process concerned; and an increment circuit 4 for selectively executing a rounding off process on the output of the multiplying circuit in response to a predetermined rounding off control signal when the multiplying circuit output is selected in the selection circuit, and for selectively adding "1" to the LSB of the output of the inversion circuit in response to the above-mentioned division or square root control signal when the output of the bit inversion circuit is selected in the selection circuit, and for normalizing the above-obtained respective output values.

The division operation processes are as follows. When the floating point division operation A/B is carried out using the above-described iterative method, in each iterative cycle the necessary operation $(2 - BX_i)$ is first executed using the multiplying circuit, the bit inversion circuit, and the incrementer. Here, $X_0$ is an initial value of the reciprocal of the divisor B, and $X_i$ is an ith approximation value of the reciprocal, and $X_i$ is such that $0 < BX_i \leq 1$, $(i = 0, 1,...)$. Then, the multiplication operation $X_{i+1} = X_i(2 - BX_i)$, which gives an approximation value of the reciprocal of the divisor B, is executed by the multiplying circuit, and the iterative cycle comprising these respective calculations is repeated a predetermined number of times, whereafter the desired result A/B is determined by multiplying together the resulting final reciprocal value $X_{i+1}$ and the dividend A.

A square root operation is based on the equivalence $C = \sqrt{N} = (N/\sqrt{N})$. If the binary number N is expressed in normalized floating point form according to the IEEE standard, the mantissa part of this number is a number B such that $1 \leqq B < 2$.

The approximate value $X_{i+1}$ of $1/\sqrt{B}$ may be obtained by iteration using the formula:
$X_{i+1} = (1/2)*X_i(3 - BX_i^2)$; where $0 < X_0 \leqq \sqrt{3/B}$, $B > 0$, and $X_0$ is an initial value.

If the initial value $X_0$ read from a look up table (ROM) satisfies the inequality $0 < X_0 \leqq \sqrt{1/B}$, it follows that $0 < Y_0X_0 \leqq 1$, where $Y_0 = BX_0$ and therefore, $2 \leqq (3 - Y_0X_0) < 3$, $1 \leqq (1/2)*(3 - Y_0X_0) < 3/2$, and $(1/2)*(3 - Y_0X_0)$ is a normalized number. Accordingly, $(1/2)*(3 - Y_iX_i)$ will generally be a normalized number.

The calculation of $(1/2)*(3 - Y_iX_i)$ is effected on the following basis. Since $0 < Y_iX_i \leqq 1$, if $\overline{Y_iX_i}$ is the inverted value of the bits to the right of the binary point of $Y_iX_i$, $(3 - Y_iX_i)d = (10.\overline{Y_iX_i} + \text{LSB}(1))b$, where LSB(1) denotes an addition of "1" to the LSB, ( )d indicates that the bracketed expression is in decimal notation, and ( )b indicates that the bracketed expression is in binary notation. The thus obtained binary number constituting $(10.\overline{Y_iX_i} + \text{LSB}(1))b$ is then shifted to the right by one bit, to give $(1/2)*(3 - Y_iX_i)$, this being a necessary step in the Newton-Raphson method square root operation, assuming that $0 < Y_iX_i \leqq 1$.

By using the above binary manipulations, the calculation of $X_{i+1}$, which is repeated five times during the iterative process, is reduced to the steps shown below:-

MLT: $B*X_i$ (hereinafter $B*X_i = Y_i$)

Manipulations (above): $(1/2)*(3 - Y_i*X_i)$

MLT: $X_i*(1/2)*(3 - Y_i*X_i)$

Thus, the calculation of $X_{i+1}$ may be executed by just two arithmetic operations in addition to the above-described binary manipulations.

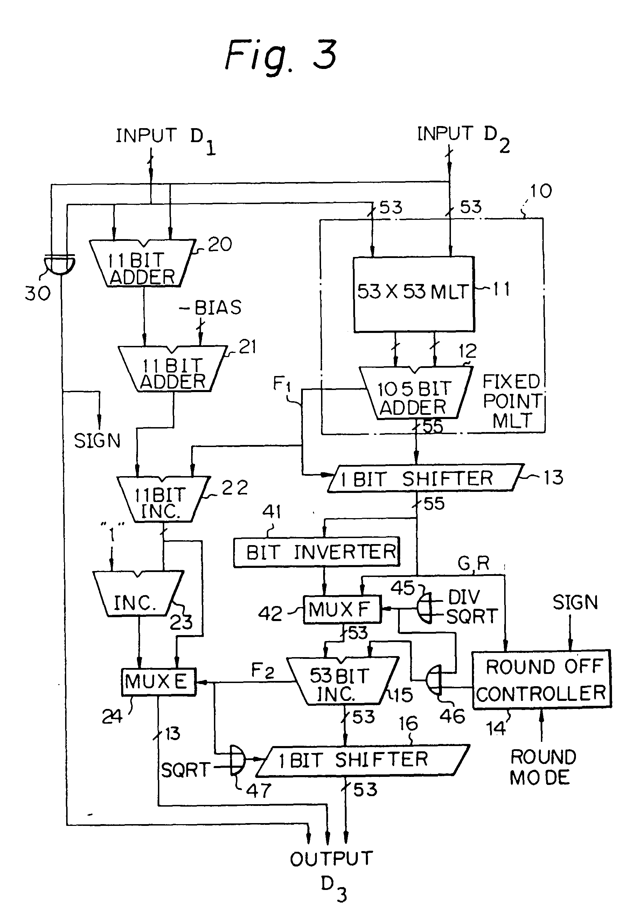

Figure 3 shows a block diagram of a floating point arithmetic unit, having two inputs for receiving normalized operands conforming to the relevant IEEE standard.

The unit comprises an exponent operation circuit, a sign operation circuit, and a mantissa operation circuit. The exponent operation circuit comprises adders 20 and 21, incrementers 22 and 23, and a multiplexer 24; the sign operation circuit comprises an exclusive OR circuit 30; and the mantissa operation circuit comprises a fixed point multiplier 10, a one bit shifter 13 as a first right shift means, a rounding off controller 14, a 53 bit incrementer 15, a one bit shifter 16 as a second right shifter, a bit inverter 41 as an inversion means, a multiplexer (MUXF) 42, and OR circuits 45, 46 and 47.

The inverter 41 is located between the shifter 13 and the incrementer 15 in the mantissa operation circuit and performs an inversion operation on the output from the shifter, and the multiplexer 42 selects either the output of the inverter 41 or the output of the shifter in response to a control signal specifying either a division or square root process. In the case of a division process, a division control signal DIV is at a high (H) level when the operation $(2-BX_i)$ is executed and the output of the inverter 41 is selected, and in the case of a square root process, a square root control signal SQRT is at H level when the operation $(1/2)*(3-Y_i*X_i)$ is executed and the output of the inverter 41 is selected in the multiplexer 42. In the case of a simple multiplication process to form the product of the two applied operands, the control signals DIV and SQRT are both at a low (L) level and the output of the shifter 13 is selected.

It is assumed that the two inputs of the unit receive binary data $D_1$ and $D_2$ expressed in floating point form as follows:

$$D_1 = (-1)^{Sa}2^{Ea-BS} \qquad (1.\text{Fa})$$

$$D_2 = (-1)^{Sb}2^{Eb-BS} \qquad (1.\text{Fb}).$$

First, in the mantissa operation circuit, the fixed point multiplier multiplies the respective mantissa portions (1.Fa) and (1.Fb) of the operands $D_1$ and $D_2$ together. The fixed point multiplier comprises a partial products generation and addition circuit 11 and an adder 12.

The shifter 13 shifts the output of the adder 12 by one bit to the right (to the LSB side), and selectively outputs either the shifted data or the unshifted output data from the adder 12 in response to an overflow signal $F_1$ generated by the adder 12. In this embodiment, when the signal $F_1$ is output, the shifted data is selected.

The rounding off controller 14 operates during the above-mentioned simple multiplication process. The rounding off controller 14 receives the sign data and a predetermined round mode signal, rejects the figures below the LSB (rounding off process), determines where or not "1" should be added to the LSB, and outputs a rounding off control signal to initiate such addition.

The incrementer 15, in the case of the above-mentioned simple multiplication operation, adds "1" to the LSB of the output data of the multiplexer 42 (i.e. output of shifter 13) in response to the rounding off control signal from the rounding off controller 14. The incrementer 15, in the case of the appropriate multiplication/subtraction operation during each cycle of the iterative process in either the division or square root operation, adds "1" to the LSB of the output data of the multiplexer 42 (i.e. output of inverter 41) in response to the control signal DIV or SQRT. In this case, if the added result data is not normalized, the overflow signal $F_2$ is output.

The shifter 16, as in the shifter 13, shifts the output data of the incrementer 15 by one bit to the right (to the LSB side) when either the overflow signal $F_2$ or the signal SQRT is active, but otherwise outputs the data from the incrementer 15 unshifted. The output data from the shifter 16 constitutes the result $D_3$ of the operation performed on the input operands $D_1$ and $D_2$.

In the exponent operation circuit, the adder 20 adds the data $E_a$ and $E_b$, which are the exponent portions corresponding to the exponents of the data $D_1$ and $D_2$, and the adder 21 adds the intermediate exponent sum $(E_a + E_b)$,, which is an output of the adder 20, to a predetermined negative bias (-BS). In dependence upon the overflow signal $F_1$, the incrementer 22 adds "1" to the resulting exponent $(E_a + E_b - BS)$ supplied from the adder 21; the incrementer 23 always adds "1" to the output data of the incrementer 22 to enable correction of any overflow arising from the rounding off process; and the multiplexer 24 effects such correction by selecting either the output of the incrementer 22 or the output of the incrementer 23 in response to overflow signal $F_2$. The multiplexer 24 selects the output of the incrementer 23 when the signal $F_2$ is output, and selects the output of the incrementer 22 when the signal $F_2$ is not output. The selected data provides the exponent portion of the result $D_3$.

In the sign operation circuit, the exclusive OR circuit 30 receives sign data $S_a$ and $S_b$ corresponding to the input data $D_1$ and $D_2$ and outputs the sign data. The sign data becomes "0" (positive) when the respective signs of the input data $D_1$ and $D_2$ are the same, and becomes "1" (negative) when the signs are different. The sign data is supplied to the rounding off controller 14 and is also output to give the sign of the result $D_3$.

A division process performed by the unit of Figure 3 in accordance with the IEEE standard is explained in detail below. The division is $C = A/B = A(1/B)$, and the operands A and B, and the result C are provided in normalized form. Firstly, an (i + 1)th approximation is obtained of the reciprocal function 1/B using the iterative process based on the formula

$X_{i+1} = X_i(2 - BX_i)$; where $0 < X_0 < 2/B$ when B > 0, and $0 > X_0 > 2/B$ when B < 0.

The initial value $X_0$ is found, such that $0 < X_0 \leq 1/B$, using a look up table (not shown). It follows that $0 < BX_0 \leq 1$, and therefore that $1 \leq 2 - BX_0 < 2$. Here $(2 - BX_0)$ is a normalized number, and thus, generally, $(2 - BX_i)$ is a normalized number.

Each iterative cycle comprises two steps. In a first step the operation $(2 - BX_i)$, where $0 < BX_i \leq 1$, is executed as follows. Where $\overline{BX_i}$ is the inverted value of $BX_i$, $2 - BX_i = \overline{BX_i} + LSB(1)$. As before, LSB(1) denotes the addition "+1" to LSB.

First the exponent operation circuit and the sign operation circuit are disabled, then the appropriate data of the divisor B and the initial value $X_0$ of the reciprocal of the divisor are supplied to the multiplier 10 as respective input data $D_1$ and $D_2$, and the control signal DIV is set to H level. The output $BX_0$ of the multiplier 10 is supplied through shifter 13 to the inverter 41, which inverts each bit as required to form $\overline{BX_0}$, which result is selected by the multiplexer 42 and supplied to the incrementer 15. The incrementer 15 adds "1" to the LSB of the input data $(\overline{BX_0})$ in response to the H level signal DIV and the added data $(\overline{BX_0} + LSB(1))$, i.e. $(2 - BX_0)$, is normalized through the shifter 16 and output as normalized data $D_3$ (step 1).

In a second step the output data $(2 - BX_0)$, from the first step, and the initial value $X_0$ are used to provide the multiplier 10 with input data $D_1$ and $D_2$, and the control signal DIV is made L level, and the output of the multiplier 10, $X_0(2 - BX_0)$, is supplied to the incrementer 15 through the shifter 13, having been selected by the multiplexer 42. The incrementer 15 executes the rounding off process, if required, in accordance with the appropriate control signal from the rounding off controller 14. Similarly, the output data of the incrementer 15 is normalized through the shifter 16, and output as data $D_3$ representing $X_1$ (step 2).

Thereafter, the above steps 1 and 2 are repeated three or four times, as successive cycles of the iterative process, and thus the obtained data $X_{i+1}$, i.e. an (i+1)th approximation for the value of 1/B, is supplied to the multiplier 10 with the dividend data A, as input data $D_1$ and $D_2$. At this time, the signal DIV is made L level and the exponent operation circuit and the sign operation circuit are enabled, so that the result of the floating point division A/B is output as data $D_3$.

As mentioned above, provided that $0 < BX_i \leq 1$, the operation $(2 - BX_i)$ which is necessary in the Newton-Raphson division method can be carried out in one step, simply by adding "1" to the LSB of $\overline{BX_i}$, which is an inverted form of $BX_i$.

Accordingly, each cycle in the iterative process, based on $X_{i+1} = X_i(2 - BX_i)$, used to calculate the reciprocal of the divisor (1/B) requires just two steps, one step being the operation $(2 - BX_i)$ and the other step the operation $X_i(2 - BX_i)$, whereby the separate subtraction operation that would be required to accomplish the said one step in the unit of Fig. 1, for example, is avoided. Three to four iterations are typically carried out, so the total operation time for the floating point division is considerably shorted, as compared with the unit of Fig. 1.

The operation of $(1/2)*(3 - Y_i*X_i)$, which is used in the square root process, is carried out as follows. Since the output $Y_iX_i$ from the multiplier 10 is such that $0 < Y_iX_i \leq 1$, the fixed-point-form data output from the shifter 13 is 1.0000... or 0.xxxx.... On passing through the inverter 41, the data 1.0000... becomes 1.1111.... and 0.xxxx... becomes $0.\overline{xxxx}$...., where $\bar{x}$ denotes the inverted value of x. When the operation $(1/2)*(3 - Y_i*X_i)$ in the square root process is executed, the activated control signal SQRT selects the output of the inverter 41 through the multiplexer 42. If the signal SQRT is not supplied, the output of the shifter 13 is supplied to the incrementer 15; when the signal SQRT is supplied, "1" is added to the content of the incrementer 15 at the LSB thereof. The output of the incrementer 15 is passed through the shifter 16 to provide the mantissa output. The bit to the left of the binary point is set to 1 in the shifter 16. The rounding off process (if selected) is the same as in the division operation. In the incrementer 15, when the carry signal $F_2$ is "1", the signal $F_2$ is supplied to the multiplexer (MUXE) 24 in the exponent operation circuit, so that the output from the incrementer 23 is selected instead of the output from the incrementer 22, and the output of the incrementer 15 is shifted by one bit to the right in the shifter 16. When the signal SQRT is supplied, the output of the incrementer 15 is also shifted.

Accordingly, at the output of the incrementer 15, the result of the operation $(3-Y_i{}^*X_i)$ is provided and this result is divided by two in the shifter 16. Thus, provided that $0 < Y_iX_i \leq 1$, the operation $(1/2)^*(3-Y_iX_i)$ can be executed in one step by the unit of Fig. 3, so that separate subtraction and divide-by-two operations are not required.

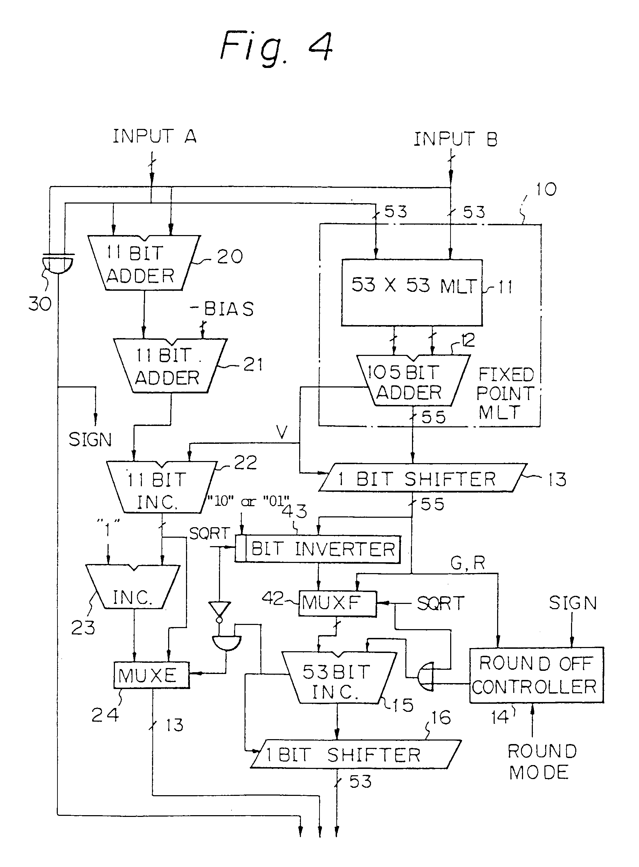

Figure 4 is a block diagram of a further floating point arithmetic unit, including a modified mantissa operation circuit. The exponent operation circuit and the sign operation circuit are the same as those of the unit of Figure 3. The unit of Fig. 4 is optimised to execute a square root operation based on an iterative process, each cycle of which comprises the steps $B^*X_i = Y_i$, $(1/2)^*(3-Y_i{}^*X_i)$, and $X_i{}^*(1/2)^*(3-Y_i{}^*X_i)$.

The modified mantissa operation circuit comprises an inverter 43 instead of inverter 41, and the application of the control signal SQRT is different from that in the unit of Fig. 3. The remaining parts are similar to the corresponding portions in the unit of Fig. 3.

The output of the shifter 13 is supplied to the inverter 43 and the multiplexer 42. In the inverter 43, the input data to the right of the binary point are inverted. When the input data to the left of the binary point is 0 the bits to the left of the binary point are set to "10"; thus the data "10.$\overline{xxxx}$..." is output. When the input data is 1.0000...., the bits to the left of the binary point are set to "01"; thus the data "01.1111...." is output.

The step $(1/2)^*(3-Y_i{}^*X_i)$ is performed as follows. Since the output YiXi of the multiplier 10 satisfies the inequality $0 < Y_iX_i \leq 1$, the multiplier overflow bit V is "0", so that the fixed-point-form data output from the shifter 13 is 1.0000... or 0.xxxx.... The data 1.0000... is modified to 01.1111... and the data 0.xxxx... is modified to 10.$\overline{xxxx}$... by the inverter 43, where $\overline{x}$ is the inverted value of the bit x. The multiplexer 42 selects the output of the inverter in response to the control signal SQRT given during this step of the square root operation, namely the step $(1/2)^*(3-Y_i{}^*X_i)$.

If the signal SQRT is not supplied, the output of the shifter 13 is supplied to the incrementer 15. If the signal SQRT is given, a further "1" is added to the LSB in the incrementer 15. The output of the incrementer 15 is passed through another shifter 16 so as to output the required mantissa portion. When the rounding off mode is selected, the rounding off controller receives the sign data and the data (G,R) from the shifter 13 and outputs the round control signal. When the rounding off control signal is given, the incrementer 15 operates in the same way as when the signal SQRT is given. An explanation of the data (G, R) is omitted, since it does not relate specifically to the invention.

When the carry of the incrementer 15 is output and the signal SQRT is not given, the multiplexer 24 selects the output of the incrementer 23. The carry of the incrementer 15 shifts the data in the shifter 16 by one bit to the right. In the square root operation, since the overflow bit (i.e. the bit corresponding to $2^1$) is "1" (the output of the incrementer 15 being in the form 10.xxxx...), the shifter 16 always shifts the data, and therefore the signal SQRT need not be supplied to the shifter 16 as in the unit of Fig. 3.

As mentioned above, at the output of the incrementer 15 the result of the operation $(3-Y_i{}^*X_i)$ is obtained, and this output is multiplied by 1/2 by a one bit right shift in the shifter 16, so that the complete operation $(1/2)^*(3-Y_i{}^*X_i)$ is executed in just one step, provided that $0 < Y_iX_i \leq 1$.

## Claims

1. A floating point arithmetic unit, for executing an iterative binary arithmetic operation upon two operands $(D_1, D_2)$ applied to the unit in floating point form, which unit includes respective operating portions for deriving mantissa, exponent and sign components of the desired result $(D_3)$ respectively, the mantissa operating portion including fixed point multiplication means (10) for multiplying together the respective mantissa components of the two operands concerned;

   characterised in that the mantissa operating portion further includes subtraction means (41, 42, 15; 43, 42, 15) operative, in each cycle of the iterative operation, to form the inverse $(BX_i; Y_iX_i)$ of the fractional part of a binary number $(BX_i; Y_iX_i)$ derived from the output of the said multiplication means (10), which derived binary number $(BX_i; Y_iX_i)$ is greater than 0 and less than or equal to 1, and to increment that inverse by adding one to the least significant bit thereof, thereby to produce a binary output value representative of the difference $(2-BX_i; 3-Y_iX_i)$ between a first predetermined positive integer (2;3) and the said derived binary number $(BX_i; Y_iX_i)$ without adding that integer to the derived binary number, the said first predetermined positive integer being 2 or 3.

2. A floating point arithmetic unit as claimed in claim 1, wherein the said iterative binary arithmetic operation is a division operation in which, in each said cycle, the calculation

$$X_{i+1} = X_i (2\text{-}BX_i)$$

is performed,

where i is the cycle number, B is the divisor, and $X_i$ and $X_{i+1}$ are the current and next approximations respectively of the reciprocal of B, and the said subtraction means are activated when, during a predetermined step ($2\text{-}BX_i$) of each said cycle, the multiplication means form the product $BX_i$ of the divisor B and the said current approximation $X_i$ of the reciprocal of B, to perform such inverse formation and increment operations on the said derived binary number, thereby to produce the said binary output value representative of $2\text{-}BX_i$.

3. A floating point arithmetic unit as claimed in claim 1, wherein the said iterative binary arithmetic operation is a square root operation in which, in each said cycle, the calculation

$$X_{i+1} = \tfrac{1}{2} X_i (3\text{-}BX_i^2)$$

is performed,

where i is the cycle number, B is the number whose square root is to be found, and $X_i$ and $X_{i+1}$ are the current and next approximations respectively of the square root of B, and the subtraction means are activated when, during a predetermined step ($3\text{-}Y_iX_i$) of each said cycle, the multiplication means (10) form the product $Y_iX_i$ of the said current approximation $X_i$ and an intermediate product $Y_i$ of B and $X_i$ produced during a preceding step of the cycle concerned, to perform such inverse formation and increment operations on the said derived binary number, thereby to produce the said binary output value representative of $3\text{-}Y_iX_i$.

4. A floating point arithmetic unit as claimed in claim 1, wherein the said subtraction means are also operable selectively to produce, by such inverse formation and increment operations performed on the said derived binary number ($Y_iX_i$), a binary output value representative of the difference ($3\text{-}Y_iX_i$) between a second predetermined positive integer (3), different from the said first predetermined positive integer (2), and the said derived binary number ($Y_iX_i$), one of the said first and second predetermined positive integers being 2 and the other being 3.

5. A floating point arithmetic unit as claimed in claim 4, operable selectively to carry out respective first and second different such iterative binary arithmetic operations, wherein the operation of the said subtraction means is modified, according to which of the two iterative binary arithmetic binary operations is being performed by the unit, such that the binary output value produced by the subtraction means when the unit is performing the said first iterative binary arithmetic operation is representative of the difference ($2\text{-}BX_i$) between the said first predetermined positive integer (2) and the said derived binary number ($BX_i$), and is representative of the difference ($3\text{-}Y_iX_i$) between the said second predetermined positive integer (3) and the said derived binary number ($Y_iX_i$) when the unit is performing the said second iterative binary arithmetic operation.

6. A floating point arithmetic unit as claimed in claim 5, wherein:
   the said first iterative binary arithmetic operation is a division operation in which, in each said cycle, the calculation

$$X_{i+1} = X_i (2\text{-}BX_i)$$

is performed,

where i is the cycle number, B is the divisor, and $X_i$ and $X_{i+1}$ are the current and next approximations respectively of the reciprocal of B, and the said subtraction means are activated when, during a predetermined step ($2\text{-}BX_i$) of each said cycle of the said division operation, the multiplication means form the product $BX_i$ of the divisor B and the said current approximation $X_i$ of the reciprocal of B, to perform such inverse formation and increment operations on the said derived binary number, thereby to produce the said binary output value representative of $2\text{-}BX_i$; and the said second iterative binary arithmetic operation is a square root operation in which, in each said cycle, the calculation

$$X_{i+1} = \tfrac{1}{2} X_i (3\text{-}BX_i^2)$$

is performed,
where i is the cycle number, B is the number whose square root is to be found, and $X_i$ and $X_{i+1}$ are the current and next approximations respectively of the square root of B, and the subtraction means are activated when, during a predetermined step ($3\text{-}Y_iX_i$) in each said cycle of the said square root operation, the multiplication means (10) form the product $Y_iX_i$ of the said current approximation $X_i$ and an in-

termediate product $Y_i$ of B and $X_i$ produced during a preceding step of the cycle concerned, to perform such inverse formation and increment operations on the said derived binary number, thereby to produce the said binary output value representative of $3-Y_iX_i$.

7. A floating point arithmetic unit as claimed in claim 6, wherein the mantissa operating portion further includes:

a first right shift means (13) connected to an output of the fixed point multiplication means (10) and operable to deliver at a data output thereof the said derived binary number, representing the product $BX_i$ or $Y_iX_i$ as the case may be, in the form 1.0000.... or 0.xxxx....;
incrementer means (15) having a data input for receiving a binary input value, and operable in response to an increment signal to increment the received binary input value by one;
inversion means (41) connected to the said data output of the said first right shift means (13) for forming the said inverse of the fractional part of the said derived binary number, the inversion means being operable selectively to apply that inverse to the said data input of the incrementer means (15) when the said predetermined step $(2-BX_i; 3-Y_iX_i)$ of the said division or square root operation is being performed by the unit, the said increment signal also being applied to the said incrementer means during that step $(2-BX_i; 3-Y_iX_i)$ so that the incrementer means add one to the said inverse, and being operable, at other times during the said cycle, to connect the said data output of the first right shift means to the said data input of the said incrementer means (15);
rounding off control means (14) connected to the said data output of the first right shift means (13) and operable to produce a round-off control signal for use by the said incrementer means (15); and
second right shift means (16) connected for receiving an output value of the said incrementer means (15) and also connected for receiving a carry signal produced by the said incrementer means, and operable in response to that carry signal, and during the said predetermined step $(3-Y_iX_i)$ of the square root operation, to shift the received output value to the right.

8. A floating point arithmetic unit as claimed in claim 7, wherein the said fixed point multiplication means (10) comprise:

a partial product multiplier and addition circuit; and

an adder;
a carry signal produced by the adder being applied to the said first right shift means (13) for causing the binary value produced at the said output of the fixed point multiplication means (10) to be shifted by one bit to the right.

9. A floating point arithmetic unit as claimed in claim 7 or 8, wherein the said inversion means (41, 42, 45) comprise:

an inverter (41); and
a multiplexer (42) connected between the said inverter (41) and the said incrementer means (15) and also connected for receiving a control signal (DIV, SQRT) which is activated when, in each said cycle of the said division and square root operations, the said predetermined step $(2-BX_i; 3-Y_iX_i)$ is performed;
the multiplexer (42) being operable to select the binary value at the said output of the said first right shift means (13) when the said control signal (DIV, SQRT) is inactive, and to select the said inverse produced by the said inverter (41) when the control signal (DIV, SQRT) is active.

10. A floating point arithmetic unit as claimed in claim 3, wherein the mantissa operating portion further includes:

a first right shift means (13) connected to an output of the fixed point multiplication means (10) and operable to deliver at a data output thereof the said derived binary number, representing the product $Y_iX_i$, in the form 1.0000.... or 0.xxxx....;
incrementer means (15) having a data input for receiving a binary input value, and operable in response to an increment signal to increment the received binary input value by one;
inversion means (42, 43) connected to the said data output of the said first right shift means (13) for forming the said inverse by inverting each bit to the right of the binary point of the said derived binary number and by presetting the bits to the left of the binary point to "10" when the said derived binary number is 0.xxxx.... and to "01" when the said derived binary number is 1.0000...., the inversion means being operable selectively to apply that inverse to the said data input of the incrementer means (15) when the said predetermined step $(3-Y_iX_i)$ of the said square root operation is being performed by the unit, the said increment signal also being applied to the said incrementer means during that step $(3-Y_iX_i)$ so that the incrementer means add one to the said inverse, and being operable, at other times during the said cycle, to connect the said data output of the first right shift means (13) to the said data input of the said incrementer means (15);

rounding off control means (14) connected to the said data output of the first right shift means (13) and operable to produce a round-off control signal for use by the said incrementer means (15); and

second right shift means (16) connected for receiving an output value of the said incrementer means (15) and also connected for receiving a carry signal produced by the said incrementer means, and operable in response to that carry signal, and during the said predetermined step $(3-Y_iX_i)$ of the square root operation, to shift the received output value to the right.

## Patentansprüche

1. Gleitpunktarithmetikeinheit zum Ausführen einer iterativen binären Arithmetikoperation an zwei Operanden $(D_1, D_2)$, die auf die Einheit in Gleitpunktform angewendet werden, welche Einheit jeweilige Operationsabschnitte zum Herleiten von Mantissen-, Exponenten- bzw. Vorzeichenkomponenten des gewünschten Resultats $(D_3)$ enthält, wobei der Mantissenoperationsabschnitt ein Festpunktmultiplikationsmittel (10) umfaßt, um die jeweiligen Mantissenkomponenten der zwei betreffenden Operanden miteinander zu multiplizieren;

dadurch gekennzeichnet, daß der Mantissenoperationsabschnitt ferner ein Subtraktionsmittel (41, 42, 15; 43, 42, 15) enthält, das in jedem Zyklus der iterativen Operation operativ ist, um den Kehrwert $(BX_i; Y_iX_i)$ des Bruchteils einer Binärzahl $(BX_i; Y_iX_i)$ zu bilden, die aus der Ausgabe des Multiplikationsmittels (10) hergeleitet wird, welche hergeleitete Binärzahl $(BX_i; Y_iX_i)$ größer als 0 und kleiner als oder gleich 1 ist, und um jenen Kehrwert zu inkrementieren, indem Eins zu seinem niedrigstwertigen Bit hinzuaddiert wird, um dadurch einen binären Ausgabewert zu erzeugen, der die Differenz $(2-BX_i; 3-Y_iX_i)$ zwischen einer ersten vorbestimmten positiven ganzen Zahl (2; 3) und der hergeleiteten Binärzahl $(BX_i; Y_iX_i)$ darstellt, ohne zu der hergeleiteten Binärzahl jene ganze Zahl zu addieren, wobei die erste vorbestimmte positive ganze Zahl 2 oder 3 ist.

2. Gleitpunktarithmetikeinheit nach Anspruch 1, bei der die iterative binäre Arithmetikoperation eine Divisionsoperation ist, bei der in jedem genannten Zyklus die Berechnung

$$X_{i+1} = X_i (2-BX_i)$$

ausgeführt wird,

wobei i die Zyklusnummer ist, B der Divisor ist und $X_i$ und $X_{i+1}$ die gegenwärtigen bzw. nächsten Approximationen des Reziprokwertes von B sind,

und das Subtraktionsmittel aktiviert wird, wenn während eines vorbestimmten Schrittes $(2-BX_i)$ von jedem genannten Zyklus das Multiplikationsmittel das Produkt $BX_i$ aus dem Divisor B und der genannten gegenwärtigen Approximation $X_i$ des Reziprokwertes von B bildet, um solche Kehrwertbildungs- und Inkrementierungsoperationen an der genannten hergeleiteten Binärzahl auszuführen, um dadurch den genannten binären Ausgabewert zu erzeugen, der $2-BX_i$ darstellt.

3. Gleitpunktarithmetikeinheit nach Anspruch 1, bei der die iterative binäre Arithmetikoperation eine Quadratwurzeloperation ist, bei der in jedem genannten Zyklus die Berechnung

$$X_{i+1} = \tfrac{1}{2} X_i (3-BX_i^2)$$

ausgeführt wird,

wobei i die Zyklusnummer ist, B die Zahl ist, deren Quadratwurzel zu ermitteln ist, und $X_i$ und $X_{i+1}$ die gegenwärtigen bzw. nächsten Approximationen der Quadratwurzel von B sind, und das Subtraktionsmittel aktiviert wird, wenn während eines vorbestimmten Schrittes $(3-Y_iX_i)$ von jedem genannten Zyklus das Multiplikationsmittel (10) das Produkt $Y_iX_i$ aus der gegenwärtigen Approximation $X_i$ und einem Zwischenprodukt $Y_i$ aus B und $X_i$ bildet, das während eines vorhergehenden Schrittes des betreffenden Zyklus erzeugt wurde, um solche Kehrwertbildungs- und Inkrementierungsoperationen an der genannten hergeleiteten Binärzahl auszuführen, um dadurch den genannten binären Ausgabewert zu erzeugen, der $3-Y_iX_i$ darstellt.

4. Gleitpunktarithmetikeinheit nach Anspruch 1, bei der das Subtraktionsmittel auch selektiv betriebsfähig ist, um durch solche Kehrwertbildungs- und Inkrementierungsoperationen, die an der genannten hergeleiteten Binärzahl $(Y_iX_i)$ ausgeführt werden, einen binären Ausgabewert zu erzeugen, der die Differenz $(3-Y_iX_i)$ zwischen einer zweiten vorbestimmten positiven ganzen Zahl (3), die sich von der ersten vorbestimmten positiven ganzen Zahl (2) unterscheidet, und der genannten hergeleiteten Binärzahl $(Y_iX_i)$ darstellt, wobei eine der ersten und zweiten vorbestimmten positiven ganzen Zahlen 2 und die andere 3 ist.

5. Gleitpunktarithmetikeinheit nach Anspruch 4, die selektiv betriebsfähig ist, um solche jeweiligen ersten und zweiten verschiedenen iterativen binären Arithmetikoperationen auszuführen, bei der die Operation des Subtraktionsmittels dementsprechend abgewandelt wird, welche der zwei iterativen binären Arithmetikoperationen durch die Einheit ausgeführt wird, so daß der binäre Ausgabewert, der durch das Subtraktionsmittel erzeugt wird, wenn die Einheit die erste iterative binäre Arithmetikoperation ausführt, die Differenz $(2-BX_i)$ zwischen der ersten vorbestimmten positiven ganzen Zahl (2) und der hergeleiteten Binärzahl $(BX_i)$ darstellt, und die Differenz $(3-Y_iX_i)$ zwischen der zweiten vorbestimmten positiven ganzen Zahl (3) und der hergeleiteten Binärzahl $(Y_iX_i)$ darstellt, wenn die Einheit die zweite iterative binäre Arithmetikoperation ausführt.

6. Gleitpunktarithmetikeinheit nach Anspruch 5, bei der:

die erste iterative binäre Arithmetikoperation eine Divisionsoperation ist, bei der in jedem genannten Zyklus die Berechnung

$$X_{i+1} = X_i (2-BX_i)$$

ausgeführt wird,
wobei i die Zyklusnummer ist, B der Divisor ist und $X_i$ und $X_{i+1}$ die gegenwärtigen bzw. nächsten Approximationen des Reziprokwertes von B sind,
und das Subtraktionsmittel aktiviert wird, wenn während eines vorbestimmten Schrittes $(2-BX_i)$ von jedem genannten Zyklus der Divisionsoperation das Multiplikationsmittel das Produkt $BX_i$ aus dem Divisor B und der genannten gegenwärtigen Approximation $X_i$ des Reziprokwertes von B bildet, um solche Kehrwertbildungs- und Inkrementierungsoperationen an der genannten hergeleiteten Binärzahl auszuführen, um dadurch den genannten binären Ausgabewert zu erzeugen, der $2-BX_i$ darstellt; und
die zweite iterative binäre Arithmetikoperation eine Quadratwurzeloperation ist, bei der in jedem genannten Zyklus die Berechnung

$$X_{i+1} = \tfrac{1}{2} X_i (3-BX_i^2)$$

ausgeführt wird,
wobei i die Zyklusnummer ist, B die Zahl ist, deren Quadratwurzel zu ermitteln ist, und $X_i$ und $X_{i+1}$ die gegenwärtigen bzw. nächsten Approximationen der Quadratwurzel von B sind,
und das Subtraktionsmittel aktiviert wird, wenn während eines vorbestimmten Schrittes $(3-Y_iX_i)$ in jedem genannten Zyklus der Quadratwurzeloperation das Multiplikationsmittel (10) das Produkt $Y_iX_i$ aus der gegenwärtigen Approximation $X_i$ und einem Zwischenprodukt $Y_i$ aus B und $X_i$ bildet, das während eines vorhergehenden Schrittes des betreffenden Zyklus erzeugt wurde, um solche Kehrwertbildungs- und Inkrementierungsoperationen an der genannten hergeleiteten Binärzahl auszuführen, um dadurch den genannten binären Ausgabewert zu erzeugen, der $3-Y_iX_i$ darstellt.

7. Gleitpunktarithmetikeinheit nach Anspruch 6, bei der der Mantissenoperationsabschnitt ferner enthält:

ein erstes Rechtsverschiebungsmittel (13), das mit einem Ausgang des Festpunktmultiplikationsmittels (10) verbunden ist und betriebsfähig ist, um an einem Datenausgang von sich die genannte hergeleitete Binärzahl, die, je nachdem, das Produkt $BX_i$ oder $Y_iX_i$ darstellt, in der Form 1.0000.... oder 0.xxxx.... bereitzustellen;
ein Inkrementierermittel (15), das einen Dateneingang zum Empfangen eines binären Eingangswertes hat und als Reaktion auf ein Inkrementierungssignal betriebsfähig ist, um den empfangenen binären Eingangswert um Eins zu inkrementieren;
ein Inversionsmittel (41), das mit dem Datenausgang des ersten Rechtsverschiebungsmittels (13) verbunden ist, zum Bilden des genannten Kehrwertes des Bruchteils der hergeleiteten Binärzahl, welches Inversionsmittel selektiv betriebsfähig ist, um jenen Kehrwert auf den Dateneingang des Inkrementierermittels (15) anzuwenden, wenn der vorbestimmte Schritt $(2-BX_i; 3-Y_iX_i)$ der Divisions- oder Quadratwurzeloperation durch die Einheit ausgeführt wird, wobei das Inkrementierungssignal während jenes Schrittes $(2-BX_i; 3-Y_iX_i)$ auch auf das Inkrementierermittel angewendet wird, so daß das Inkrementierermittel Eins zu dem genannten Kehrwert hinzuaddiert, und zu anderen Zeiten während des genannten Zyklus betriebsfähig ist, um den Datenausgang des ersten Rechtsverschiebungsmittels mit dem Dateneingang des Inkrementierermittels (15) zu verbinden;
ein Rundungssteuermittel (14), das mit dem Datenausgang des ersten Rechtsverschiebungsmittels (13) verbunden ist und betriebsfähig ist, um ein Rundungssteuersignal zur Verwendung durch das Inkrementierermittel (15) zu erzeugen; und

ein zweites Rechtsverschiebungsmittel (16), das zum Empfangen eines Ausgabewertes des Inkrementierermittels (15) verbunden ist und auch zum Empfangen eines Übertragssignals verbunden ist, das durch das Inkrementierermittel erzeugt wird, und als Reaktion auf jenes Übertragssignal und während des genannten vorbestimmten Schrittes ($3\text{-}Y_iX_i$) der Quadratwurzeloperation betriebsfähig ist, um den empfangenen Ausgabewert nach rechts zu verschieben.

8. Gleitpunktarithmetikeinheit nach Anspruch 7, bei der das Festpunktmultiplikationsmittel (10) umfaßt:

eine Teilproduktmultiplizierer- und Additionsschaltung; und
einen Addierer;
wobei ein übertragssignal, das durch den Addierer erzeugt wird, auf das erste Rechtsverschiebungsmittel (13) angewendet wird, zum Bewirken, daß der Binärwert, der an dem Ausgang des Festpunktmultiplikationsmittels (10) erzeugt wird, um ein Bit nach rechts verschoben wird.

9. Gleitpunktarithmetikeinheit nach Anspruch 7 oder 8, bei der das Inversionsmittel (41, 42, 45) umfaßt:

einen Inverter (41); und
einen Multiplexer (42), der zwischen dem Inverter (41) und dem Inkrementierermittel (15) verbunden ist und auch zum Empfangen eines Steuersignals (DIV, SQRT) verbunden ist, das aktiviert wird, wenn in jedem Zyklus der Divisions- und Quadratwurzeloperationen der vorbestimmte Schritt ($2\text{-}BX_i$; $3\text{-}Y_iX_i$) ausgeführt wird;
welcher Multiplexer (42) betriebsfähig ist, um den Binärwert an dem Ausgang des ersten Rechtsverschiebungsmittels (13) zu selektieren, wenn das Steuersignal (DIV, SQRT) inaktiv ist, und den Kehrwert, der durch den Inverter (41) erzeugt wird, zu selektieren, wenn das Steuersignal (DIV, SQRT) aktiv ist.

10. Gleitpunktarithmetikeinheit nach Anspruch 3, bei der der Mantissenoperationsabschnitt ferner enthält:

ein erstes Rechtsverschiebungsmittel (13), das mit einem Ausgang des Festpunktmultiplikationsmittels (10) verbunden ist und betriebsfähig ist, um an einem Datenausgang von sich die hergeleitete Binärzahl, die das Produkt $Y_iX_i$ darstellt, in der Form 1.0000.... oder 0.xxxx.... bereitzustellen;
ein Inkrementierermittel (15), das einen Dateneingang zum Empfangen eines binären Eingangswertes hat und als Reaktion auf ein Inkrementierungssignal betriebsfähig ist, um den empfangenen binären Eingangswert um Eins zu inkrementieren;
ein Inversionsmittel (42, 43), das mit dem Datenausgang des ersten Rechtsverschiebungsmittels (13) verbunden ist, zum Bilden des genannten Kehrwertes durch Invertieren jedes Bits rechts vom Binärpunkt der hergeleiteten Binärzahl und durch Setzen der Bits links vom Binärpunkt auf "10", wenn die hergeleitete Binärzahl 0.xxxx.... lautet, und auf "01", wenn die hergeleitete Binärzahl 1.0000.... lautet, welches Inversionsmittel selektiv betriebsfähig ist, um jenen Kehrwert auf den Dateneingang des Inkrementierermittels (15) anzuwenden, wenn der vorbestimmte Schritt ($3\text{-}Y_iX_i$) der Quadratwurzeloperation durch die Einheit ausgeführt wird, wobei das Inkrementierungssignal während jenes Schrittes ($3\text{-}Y_iX_i$) auch auf das Inkrementierermittel angewendet wird, so daß das Inkrementierermittel Eins zu dem Kehrwert hinzuaddiert, und zu anderen Zeiten während des genannten Zyklus betriebsfähig ist, um den Datenausgang des ersten Rechtsverschiebungsmittels (13) mit dem Dateneingang des Inkrementierermittels (15) zu verbinden;
ein Rundungssteuermittel (14), das mit dem Datenausgang des ersten Rechtsverschiebungsmittels (13) verbunden ist und betriebsfähig ist, um ein Rundungssteuersignal zur Verwendung durch das Inkrementierermittel (15) zu erzeugen; und
ein zweites Rechtsverschiebungsmittel (16), das zum Empfangen eines Ausgabewertes des Inkrementierermittels (15) verbunden ist und auch zum Empfangen eines Übertragssignals verbunden ist, das durch das Inkrementierermittel erzeugt wird, und als Reaktion auf jenes Übertragssignal und während des vorbestimmten Schrittes ($3\text{-}Y_iX_i$) der Quadratwurzeloperation betriebsfähig ist, um den empfangenen Ausgabewert nach rechts zu verschieben.

**Revendications**

1. Unité arithmétique en virgule flottante destinée à exécuter une opération arithmétique binaire itérative sur deux opérandes ($D_1$, $D_2$) appliqués à l'unité sous une forme à virgule flottante, laquelle unité inclut des parties d'opérations respectives destinées à obtenir des composants de mantisse, d'exposant et de signe du résultat désiré ($D_3$) respectivement, la partie d'opération de la mantisse incluant des moyens de multiplication à virgule fixe (10) destinés à multiplier ensemble les composants de la mantisse respective des deux opérandes concernés,

caractérisée en ce que la partie d'opération de la mantisse comprend en outre des moyens de soustraction (41, 42, 15 ; 43, 42, 15) en vigueur, dans chaque cycle de l'opération itérative, pour former l'inverse ($BX_i$ ; $Y_iX_i$) de la partie fractionnaire d'un nombre binaire ($BX_i$ ; $Y_iX_i$) obtenu à partir de la sortie desdits moyens de multiplication (10), lequel nombre binaire obtenu ($BX_i$ ; $Y_iX_i$) est supérieur à 0 et inférieur ou égal à 1, et pour incrémenter cet inverse en ajoutant un au bit le moins significatif de celui-ci, afin de produire ainsi une valeur de sortie binaire représentative de la différence ($2-BX_i$ ; $3-Y_iX_i$) entre un premier nombre entier positif prédéterminé (2 ; 3) et ledit nombre binaire obtenu ($BX_i$ ; $Y_iX_i$) sans ajouter ce nombre entier au nombre binaire obtenu, ledit premier nombre entier positif prédéterminé étant 2 ou 3.

2. Unité arithmétique en virgule flottante selon la revendication 1, dans laquelle ladite opération arithmétique binaire itérative est une opération de division dans laquelle, dans chaque dit cycle, le calcul

$$X_{i+1} = X_i\,(2\text{-}BX_i)$$

est effectué,

où i est le numéro de cycle, B est le diviseur, et $X_i$ et $X_{i+1}$ sont les approximations actuelle et suivante, respectivement, de l'inverse de B, et lesdits moyens de soustraction sont activés lorsque, durant une étape prédéterminée ($2-BX_i$) de chaque dit cycle, le moyen de multiplication calcule le produit $BX_i$ du diviseur B et ladite approximation actuelle $X_i$ de l'inverse de B, afin de réaliser de telles opérations de formation d'inverse et d'incrémentation sur ledit nombre binaire obtenu, en vue de produire ainsi ladite valeur de sortie binaire représentative de $2-BX_i$.

3. Unité arithmétique en virgule flottante selon la revendication 1, dans laquelle ladite opération arithmétique binaire itérative est une extraction de racine carrée dans laquelle, dans chaque dit cycle, le calcul

$$X_{i+1} = 1/2\,X_i\,(3\text{-}BX_i^2)$$

est effectué,

où i est le numéro de cycle, B est le nombre dont la racine carrée doit être extraite, et $X_i$ et $X_{i+1}$ sont les approximations actuelle et suivante, respectivement, de la racine carrée de B,

et les moyens de soustraction sont activés lorsque, durant une étape prédéterminée ($3-Y_iX_i$) de chaque dit cycle, les moyens de multiplication (10) élaborent le produit $Y_iX_i$ de ladite approximation actuelle $X_i$ et un produit intermédiaire $Y_i$ de B et $X_i$, produit durant une étape précédente du cycle concerné, en vue d'effectuer de telles opérations de formation d'inverse et d'incrémentation sur ledit nombre binaire obtenu, afin de produire ainsi ladite valeur de sortie binaire représentative de $3-Y_iX_i$.

4. Unité arithmétique en virgule flottante selon la revendication 1, dans laquelle lesdits moyens de soustraction peuvent être également actionnés, de manière sélective, afin de produire par de telles opérations de formation d'inverse et d'incrémentation sur ledit nombre binaire obtenu ($Y_iX_i$), une valeur de sortie binaire représentative de la différence ($3-Y_iX_i$) entre un second nombre entier positif prédéterminé (3), différent dudit premier nombre entier positif prédéterminé (2), et ledit nombre binaire obtenu($Y_iX_i$), l'un desdits premier et second nombres entiers positifs prédéterminés étant 2 et l'autre 3.

5. Unité arithmétique en virgule flottante selon la revendication 4, pouvant être actionnée, de manière sélective, afin d'exécuter des première et seconde opérations arithmétiques binaires itératives respectives différentes, dans laquelle l'opération desdits moyens de soustraction est modifiée en fonction de celle des deux opérations arithmétiques binaires itératives qui est en cours d'exécution par l'unité, de telle sorte que la valeur de sortie binaire produite par les moyens de soustraction lorsque l'unité exécute ladite première opération arithmétique binaire itérative est représentative de la différence ($2-BX_i$) entre ledit premier nombre entier positif prédéterminé (2) et ledit nombre binaire obtenu ($BX_i$), et est représentative de la différence ($3-Y_iX_i$) entre ledit second nombre entier positif prédéterminé (3) et ledit nombre binaire obtenu ($Y_iX_i$) lorsque l'unité exécute ladite seconde opération arithmétique binaire itérative.

6. Unité arithmétique en virgule flottante selon la revendication 5, dans laquelle :

ladite première opération arithmétique binaire itérative est une opération de division dans laquelle, pour chaque cycle, le calcul

$$X_{i+1} = X_i(2\text{-}BX_i)$$

est effectué,
où i est le numéro de cycle, B est le diviseur, et $X_i$ et $X_{i+1}$ sont les approximations actuelle et suivante, respectivement, de l'inverse de B, et lesdits moyens de soustraction sont activés lorsque, durant une étape prédéterminée (2-BX$_i$) de chaque dit cycle de ladite opération de division, les moyens de multiplication élaborent le produit BX$_i$ du diviseur B et ladite approximation actuelle X$_i$ de l'inverse de B, afin d'exécuter de telles opérations de formation d'inverse et d'incrémentation sur ledit nombre binaire obtenu, en produisant ainsi ladite valeur de sortie binaire représentative de 2-BX$_i$, et ladite seconde opération arithmétique binaire itérative est une extraction de racine carrée dans laquelle, dans chaque dit cycle, le calcul

$$X_{i+1} = 1/2\ X_i(3\text{-}BX_i^2)$$

est effectué,

où i est le numéro de cycle, B est le nombre dont la racine carrée doit être extraite, et X$_i$ et X$_{i+1}$ sont les approximations actuelle et suivante, respectivement, de la racine carrée de B, et les moyens de soustraction sont activés lorsque, durant une étape prédéterminée (3-Y$_i$X$_i$) dans chaque dit cycle de ladite extraction de racine carrée, les moyens de multiplication (10) élaborent le produit Y$_i$X$_i$ de ladite approximation actuelle X$_i$ et un produit intermédiaire Y$_i$ de B et X$_i$ produit durant une étape précédente du cycle concerné, afin de réaliser de telles opérations de formation d'inverse et d'incrémentation sur ledit nombre binaire obtenu, en vue de produire ainsi ladite valeur de sortie binaire représentative de 3-Y$_i$X$_i$.

7. Unité arithmétique en virgule flottante selon la revendication 6, dans laquelle la partie d'opération de mantisse comprend en outre :

des premiers moyens de décalage à droite (13) reliés à une sortie des moyens de multiplication en virgule fixe (10) et pouvant être actionnés pour délivrer à une sortie de données de ceux-ci ledit nombre binaire obtenu, représentant le produit BX$_i$ ou Y$_i$X$_i$ selon le cas, de la forme 1,0000 .... ou 0,xxxx....,
des moyens d'incrémentation (15) comportant une entrée de données destinée à recevoir une valeur d'entrée binaire, et pouvant être actionnés en réponse à un signal d'incrémentation afin d'incrémenter la valeur d'entrée binaire reçue de un,
des moyens d'inversion (41) reliés à ladite sortie de données desdits premiers moyens de décalage à droite (13) destinés à former ledit inverse de la partie fractionnaire dudit nombre binaire obtenu, les moyens d'inversion pouvant être actionnés, de manière sélective, afin d'appliquer cet inverse à ladite entrée de données des moyens d'incrémentation (15) lorsque ladite étape prédéterminée (2-BX$_i$ ; 3-Y$_i$X$_i$) de ladite opération de division ou de racine carrée est en cours d'exécution par l'unité, ledit signal d'incrémentation étant également appliqué auxdits moyens d'incrémentation durant cette étape (2-BX$_i$ ; 3-Y$_i$X$_i$) de telle sorte que les moyens d'incrémentation ajoutent un audit inverse et pouvant être actionné, à d'autres moments durant ledit cycle, pour relier ladite sortie de données desdits premiers moyens de décalage à droite à ladite entrée de données desdits moyens d'incrémentation (15),
des moyens de commande d'arrondi (14) reliés à ladite sortie de données des premiers moyens de décalage à droite (13) et pouvant être actionnés afin de produire un signal de commande d'arrondi destiné à être utilisé par lesdits moyens d'incrémentation (15), et
des seconds moyens de décalage à droite (16) reliés pour recevoir une valeur de sortie desdits moyens d'incrémentation (15) et reliés également pour recevoir un signal de retenue produit par lesdits moyens d'incrémentation, et pouvant être mis en oeuvre en réponse à ce signal de retenue et, durant ladite étape prédéterminée (3-Y$_i$X$_i$) de l'extraction de racine carrée, pour décaler la valeur de sortie reçue vers la droite.

8. Unité arithmétique en virgule flottante selon la revendication 7, dans laquelle lesdits moyens de multiplication en virgule fixe (10) comprennent :

un circuit de multiplicateur de produit partiel et d'addition, et
un additionneur,
un signal de retenue produit à partir de l'additionneur étant appliqué auxdits premiers moyens de décalage à droite (13) afin d'amener la valeur binaire produite à ladite sortie des moyens de multiplication en virgule fixe (10) à être décalée d'un bit vers la droite.

9. Unité arithmétique en virgule flottante selon la revendication 7 ou 8, dans laquelle lesdits moyens d'inversion (41, 42, 45) comprennent :

un inverseur (41), et
un multiplexeur (42) relié entre ledit inverseur (41) et lesdits moyens d'incrémentation (15) et relié également pour recevoir un signal de commande (division (DIV), racine carrée (SQRT)) qui est activé lorsque, dans chaque dit cycle desdites opérations de division et de racine carrée, ladite étape prédéterminée (2-BX$_i$ ; 3-Y$_i$X$_i$)

est réalisée,

le multiplexeur (42) pouvant être actionné afin de sélectionner la valeur binaire à ladite sortie desdits premiers moyens de décalage à droite (13) lorsque ledit signal de commande (DIV, SQRT) est inactif, et afin de sélectionner ledit inverse produit par ledit inverseur (41) lorsque le signal de commande (DIV, SQRT) est actif.

10. Unité arithmétique en virgule flottante selon la revendication 3, dans laquelle la partie d'opération de mantisse comprend en outre :

des premiers moyens de décalage à droite (13) reliés à une sortie des moyens de multiplication en virgule fixe (10) et pouvant être actionnés afin de fournir, à une sortie de données de ceux-ci, ledit nombre binaire obtenu, représentant le produit $Y_iX_i$, sous la forme 1,0000.... ou 0,xxxx....,

des moyens d'incrémentation (15) comportant une entrée de données destinée à recevoir une valeur d'entrée binaire, et pouvant être actionnés en réponse à un signal d'incrémentation afin d'incrémenter la valeur d'entrée binaire reçue de un,

des moyens d'inversion (41, 43) reliés à ladite sortie de données desdits premiers moyens de décalage à droite (13) afin d'élaborer ledit inverse par l'inversion de chaque bit à droite de la virgule binaire dudit nombre binaire obtenu et en pré-initialisant les bits à gauche de la virgule binaire à "10" lorsque ledit nombre binaire obtenu est 0,xxxx.... et à "01" lorsque ledit nombre binaire obtenu est 1,0000...., les moyens d'inversion pouvant être actionnés, de manière sélective, afin d'appliquer cette inverse à ladite entrée de données des moyens d'incrémentation (15) lorsque ladite étape prédéterminée ($3-Y_iX_i$) de ladite extraction de racine carrée est en cours d'exécution par l'unité, ledit signal d'incrémentation étant également appliqué auxdits moyens d'incrémentation durant cette étape ($3-Y_iX_i$) de telle sorte que les moyens d'incrémentation ajoutent un audit inverse, et pouvant être actionnés, à d'autres moments durant ledit cycle, pour relier ladite entrée de données des premiers moyens de décalage à droite (13) à ladite entrée de données desdits moyens d'incrémentation (15),

des moyens de commande d'arrondi (14) reliés à ladite sortie de données des premiers moyens de décalage à droite (13) et pouvant être actionnés afin de produire un signal de commande d'arrondi destiné à être utilisé par lesdits moyens d'incrémentation (15), et

des seconds moyens de décalage à droite (16) reliés pour recevoir une valeur d'entrée desdits moyens d'incrémentation (15) et reliés également pour recevoir un signal de retenue produit par lesdits moyens d'incrémentation, et pouvant être actionnés en réponse à ce signal de retenue, et durant ladite étape prédéterminée ($3-Y_iX_i$) de l'extraction de racine carrée, afin de décaler la valeur de sortie reçue vers la droite.

# Fig. 1

# Fig. 2

# Fig. 3

# Fig. 4